# EUROPEAN PATENT SPECIFICATION

(11) **EP 3 179 843 B1**
(45) Date of publication and mention of the grant of the patent: **10.10.2018**
(21) Application number: 15767354.2
(22) Date of filing: 11.08.2015
(51) Int. Cl.: A01D 34/66

(54) **MOWING MACHINE**
MÄHMASCHINE
FAUCHEUSE

(30) Priority: 12.08.2014 NL 2013322; 20.08.2014 NL 2013342
(43) Date of publication of application: 21.06.2017
(73) Proprietor: Forage Company B.V., 3147 PB Maassluis (NL)
(72) Inventor: DE JONG, Rudy, NL-3147 PB Maassluis (NL)
(74) Representative: AGCO Intellectual Property Department
(86) International application number: PCT/NL2015/050572
(87) International publication number: WO 2016/024860

(56) References cited:
- EP-A1- 0 260 750
- WO-A1-2010/140929
- FR-A1- 2 319 292
- NL-A- 7 701 080

## Description

The present invention relates to a mowing machine, in particular a mowing machine to be mounted on or towed by a tractor or such.

EP 0 260 750 discloses a mowing machine comprising a mowing section having a plurality of mower members each rotatable about an upright axis of rotation. The mowing section is connected to a frame with which the mowing machine may be mounted on a tractor or such. The mowing machine further comprises a number of shoes by means of which the mowing machine, during operation, rests on a ground surface with at least part of its weight. With this mowing machine, part of its weight may be carried by the frame and part of its weight may be carried by the support device, whereby the direct support of the support device on the ground surface is used to constantly maintain a predetermined mowing level of the mowing machine. A drawback of this mowing machine is that it is less suitable for following irregularities in the ground surface, for instance in hilly terrains, in particular irregularities in the forward driving direction.

It is an object of the present invention to provide an improved mowing machine, in particular a mowing machine which can better follow irregularities in the ground surfaces such as hilly terrains.

This object is achieved according to the invention by a mowing machine comprising:
- a frame,
- a mowing section comprising a plurality of mower members each rotatable about an upwardly directed axis of rotation, and provided with at least one mowing blade, the mowing blades of the mower members defining a mowing plane which extends substantially perpendicular to the axes of rotation, and
- a support device by means of which the mowing machine, during operation, rests on a ground surface with at least part of its weight,
wherein the mowing section and the support device, in a predetermined angular position with respect to each other, together as a unit are pivotally connected to the frame about a common axis of rotation which is substantially perpendicular to an intended forward direction of movement of the mowing machine,
wherein the common axis of rotation is arranged below the mowing plane and, as seen in the intended forward direction of movement of the mowing machine, in front of a mass center of the mowing section .

With the mowing machine according to the invention, during operation, the mowing section and the support device are mutually fixed in the predetermined angular position with respect to each other. The mowing section and the support device form an assembly. When the mowing machine is moved over irregularities in the ground, the angular position of the assembly consisting of the mowing section and the support device with respect to the frame is adapted automatically by rotation of the assembly consisting of the mowing section and the support device about the common axis of rotation. The mowing section and the support device can be configured to freely rotate, over at least a predetermined angle, with respect to the common axis of rotation to adapt the rotational position of the mowing section and the support device to the angle of the ground surface. By arranging the common axis of rotation below the mowing blades and in front of the mass center of the mowing section, the mowing section will more easily follow any irregularities in the ground surface, especially the mowing blades are prevented from getting stuck in the ground when moving up a hill.

It is noted that CH510975 discloses a mower-conditioner comprising a frame having a drawbar which can be coupled to a tractor. A mowing section comprises a plurality of mower discs which can be driven in rotation about vertical axes. The mower discs are mounted on gear boxes which slide over the ground surface. A skid shoe is arranged on one lateral end of the mowing section. The mowing section is pivotally connected to the frame by means of pivot arms extending rearwardly. The pivot axis of the pivot arms is situated behind the mowing section, as seen in the direction of travel, and also at a height above the mowing section. As a result, there is a risk that the mowing blades of the mower discs hit the ground surface when the mowing section is moved up a hill. In contrast thereto, with the mowing machine according to the invention, the mowing section is automatically tilted backwards when the mowing machine is moved up a hill.

In an embodiment of the invention, as an alternative to arranging the common axis of rotation in front of a mass center of the mowing section, or in addition thereto, the common axis of rotation, as seen in the intended forward direction of movement of the mowing machine, can be arranged in front of the axes of rotation of the plurality of mower members. Usually, when the common axis of rotation is arranged in front of the axes of rotation of the mower members, the common axis of rotation is also arranged in front of the mass center of the mowing section. Thereby, the mower blades can easily follow irregularities in the ground when the mowing machine is moved uphill.

In an embodiment of the invention, the support device, as seen in the intended forward direction of movement of the mowing machine, is delimited by a front edge, and wherein the common axis of rotation, as seen in the intended forward direction of movement of the mowing machine, is arranged between the front edge and the axes of rotation. As a result, the risk of mowing blades getting stuck in the ground is further reduced.

In an embodiment, the support device extends, as seen in the intended forward direction of movement of the mowing machine, up to or beyond the circular path of the mowing blades. By allowing the support device to protrude up to or beyond the plurality of the circular path of the mowing blades, it can be avoided that the mowing blades arrive at a change in the ground surface level before the skid element. As a result, the risk of a mowing blades getting stuck in the ground surface, which may result in damage to the mowing machine and/or in that the mowing machine entirely gets stuck in the ground, is therewith decreased.

In an embodiment of the invention, the support device comprises a skid plate having a downwardly facing slide surface configured to slide over the ground surface. A skid plate having a slide surface is advantageous, because it has relatively little resistance for sliding over the ground surface. Furthermore, the skid plate itself does not comprise any moving parts, which improves reliability and can be produced relatively easily. The slide surface is preferably an elongate slide surface having its longitudinal axis aligned with the intended forward direction of movement.

In an embodiment of the invention, the support device comprises a first skid plate extending at a first lateral end of the frame and a second skid plate extending at a second lateral end of the frame opposite to the first lateral end. In other words, the first skid plate is arranged at a first lateral end of the mowing section, and the second skid plate is arranged at a second lateral end of the mowing section remote from the first lateral end. It is advantageous to arrange skid plates at opposite ends of the mowing section such that the mowing section is supported at both lateral ends. The provision of skid plates at the opposite lateral ends may also provide protection of the mowing members at the sides of the mowing section. Additional skid plates can be arranged between the first and second skid plates to provide further support for the mowing section.

In an embodiment, the mowing section and the support device are pivotable about the common axis of rotation with respect to each other for adjusting the predetermined angular position of the mowing section and the support device with respect to each other. During operation, the mowing section and the support device are fixed with respect to each other, i.e. they are configured to follow irregularities in the ground surface by rotation about the common axis of rotation without a change in the angular position between the mowing section and the support device. By maintaining a constant angular position between the support device and the mowing section the cutting height can be maintained at a constant level. However, in order to set the cutting height, the mowing section and the support device can be rotated with respect to each other about the common axis of rotation. After the desired cutting height has been set, the mowing section and the support device are mutually fixed for operation on the field.

In an embodiment of the invention, the mowing machine comprises an angle adjustment device to adjust the angular position of the mowing section and the support device with respect to each other in order to adjust a cutting height of the mowing section. The angle adjustment device may comprise a locking device for locking the mowing section and the support device at a desired angular position with respect to each other. The locking device is preferably suitable to lock the mowing section and the support device at different angles with respect to each other. The locking device may also be adapted to limit the angular range of movement of the support device with respect to the mowing section.

In an embodiment of the invention, the angle adjustment device comprises an adjustment screw arranged between the mowing section and the support device at a distance from the common axis of rotation. An adjustment screw can be used to adjust the distance between the mowing section and the support device at a distance from the common axis of rotation. By adjusting this distance the angular position of the mowing section with respect to the support device can be altered therewith adjusting the mowing height of the mowing members. The adjustment screw may be arranged to maintain a certain distance in dependency of the position of the adjustment screw, i.e. the screw is connected to both the mowing section and the support device. In an alternative embodiment, the adjustment screw is arranged to maintain a minimum distance between the mowing section and the support device, but this distance may be increased by rotation of one or both of the mowing section and/or support device. For example, the adjustment screw can be locked by a screw nut.

According the invention, the mowing section and the support device are configured to follow irregularities in the ground surface by rotation about the common axis of rotation without a change in the angular position between the mowing section and the support device. In this case, the angular position of the mowing section and the support device with respect to each other is fixed during movement over the ground surface, but, when desired, this angular position may be adjusted, in particular to adjust the mowing height of the mowing section.

In an embodiment of the invention, the support device comprises one or more wheels. Wheels may be provided to facilitate movement of the support device over the ground surface. The wheels decrease the resistance when the mowing machine is moved over the ground surface.

In an embodiment of the invention, the mowing members are arranged in a row extending transversely to the intended forward direction of movement. The mowing section may comprise multiple mowing members that are rotatable about a substantially vertical or inclined axis of rotation.

The invention will now be described, by way of example only, with reference to the accompanying drawings in which corresponding reference symbols indicate corresponding parts, and in which:
- Figure 1A depicts a side view of a mowing machine according to a first embodiment of the invention;
- Figure 1B depicts a top view of the embodiment of Figure 1A;
- Figure 2A depicts a side view of a mowing machine according to a second embodiment of the invention;
- Figure 2B depicts the mowing machine of Figure 1A on a steep height increase of a ground surface; and
- Figures 3A and 3B depict the embodiment of Figure 2A arranged at different cutting level heights.

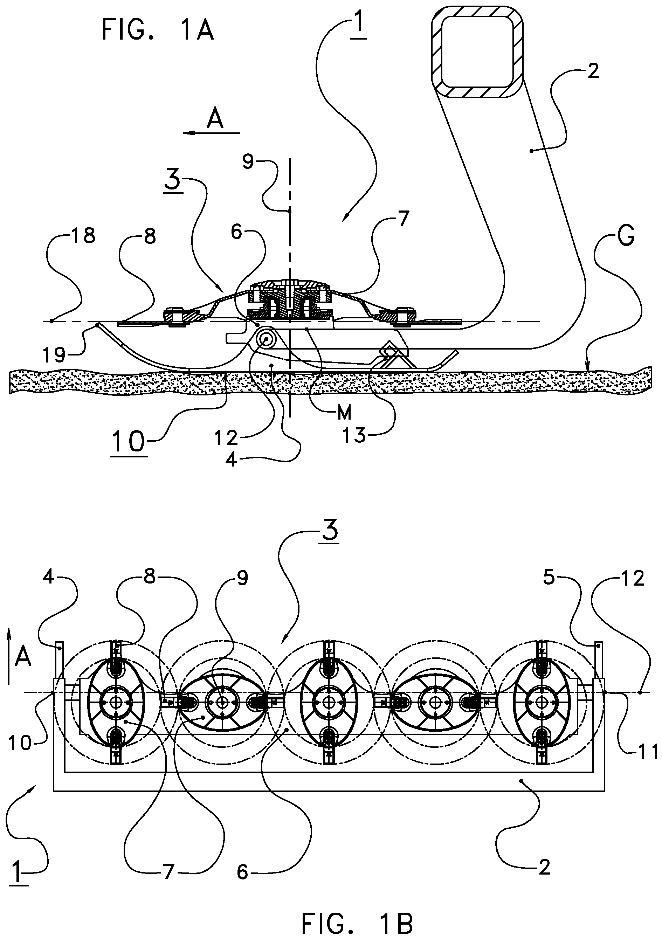

Figures 1A and 1B show a first embodiment of a mowing machine according to the invention, generally indicated by reference numeral 1.

The mowing machine 1 is configured to cut crop, such as grass, and comprises a frame 2, a mowing section 3 and a support device having a first skid plate 4 and a second skid plate 5. The frame 2 is configured to be connected to a vehicle with which the mowing machine 1 can be moved over a ground surface G. For example, the frame 2 may be configured to be mounted on a three-point lifting hitch of a tractor or such, as known in the art.

The mowing section 3 comprises a cutting bar 6, and a row of five mower members 7 supported by the cutter bar 6. Each of the mowing members 7 comprises multiple mowing or cutting blades 8. These cutting blades 8 may have any suitable shape or form to cut crop, in particular grass or grass like crops.

Each of the mowing members 6 is rotatable about an upright axis of rotation 9. It is remarked that, in this patent application, upright means that the axis of rotation is arranged, during operation, at an angle of more than 45 degrees with respect to the ground surface on which the mowing machine is supported during operation, preferably at least 65 degrees. In an embodiment the axes of rotation of the mowing members may be substantially vertical.

The cutting blades 8 are configured to cut crop, in particular grass, when the mowing members 7 are rotated about the respective axes of rotation 9 and the mowing machine is moved in an intended forward direction of movement A, hereinafter also direction A, over a ground surface G with grass or another crop to be cut. A driving device is provided to rotate the mowing members 7 in order to create the cutting circular movement of the cutting blades 8.

The first and second skid plates 4, 5 are arranged at opposite ends of the mowing section 3. The first and second skid plates 4, 5 are configured to rest, during operation, on the ground surface G to support at least part of the weight of the mowing machine 1. The rest of the weight may for example be carried by a tractor on which the frame 2 is mounted.

The first and second skid plates 4, 5 have a slide surface 10, 11 to slide over the ground surface G while at least partially supporting the mowing machine 1. The front ends of the slide surfaces 10, 11, seen in the direction A, are bent upwardly to avoid that the slide surfaces 10, 11 will be caught by irregularities in or on the ground surface, such as small pits or stones. This shape also facilitates adjustment of the orientation of the first and second skid plates 4, 5, when the mowing machine 1 is moved over uneven terrain. The back ends of the slide surfaces 10, 11 are also bent upwardly.

The first and second skid plates 4, 5 may be made of any suitable material. The slide surfaces may be made from the same material as the rest of the first and second skid plates 4, 5, but may also be made from other materials. For example, the slide surfaces 10, 11 may be provided as exchangeable parts that are preferably made of material having a high resistance to wear.

The slide surfaces 10 ,11 each have an elongate shape arranged with its longitudinal axis in the direction A to facilitate sliding over the ground surface G.

The mowing section 3, the first skid plate 4 and the second skid plate 5 are pivotable about a common axis of rotation 12. The mowing section 3 and the skid plates 4, 5 are allowed to freely rotate, together as a unit, over at least a predetermined angle with respect to the common axis of rotation 12 to adapt the rotational position of the mowing section 3 and the skid plates 4, 5 to the orientation of the ground surface G on which the first and second skid plates 4, 5 rest. The common axis of rotation 12 extends in a substantially horizontal direction and substantially perpendicular to the direction A.

The mass center M of the mowing section 3 is arranged, seen in the direction A, behind the common axis of rotation 12. As a result, the first and second skid plates and the mowing section are pulled instead of pushed over the ground surface G and will more easily follow the irregularities in the ground surface G. Also, the axes of rotation 9 of the mowing members 7 are arranged behind the common axis of rotation 12, when seen in the direction A.

Further, the mowing section 3 is pivotable about the common axis of rotation 12 with respect to the first and second support devices 4, 5. This makes it possible to adjust a relative position of the mowing section 3 with respect to the first skid plate 4 and the second skid plate 5.

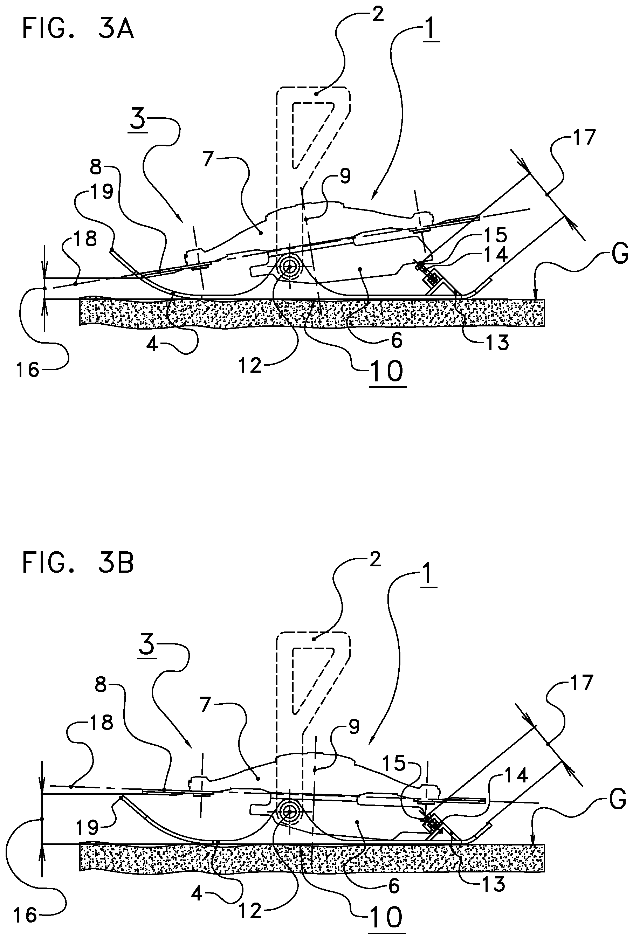

An angle adjustment device 13 is provided to hold the mowing section in a predetermined angular position with respect to the first and second skid plates 4, 5. This predetermined angular position may be adjusted by the angle adjustment device 13. Adjustment of this angular position may for example be desirable to adapt the mowing height of the cutting blades 8, as will be explained with reference to Figure 3A and 3B.

The first and second skid plates 4, 5 protrude, in the direction A, beyond the circular path of movement of the cutting blades 8. Furthermore, seen from the side (as shown in Figure 1A), the first and second skid plates 4, 5 run below the mowing plane 18 of the circular path of movement of the cutting blades 8. As a result, the first and second skid plates 4, 5 will be able to adjust the orientation when the mowing machine 1 is moved in the direction A over a steep height change before the cutting blades hit the ground surface G, which is generally undesirable as this may damage the mowing machine 1, in particular the cutting blades 8.

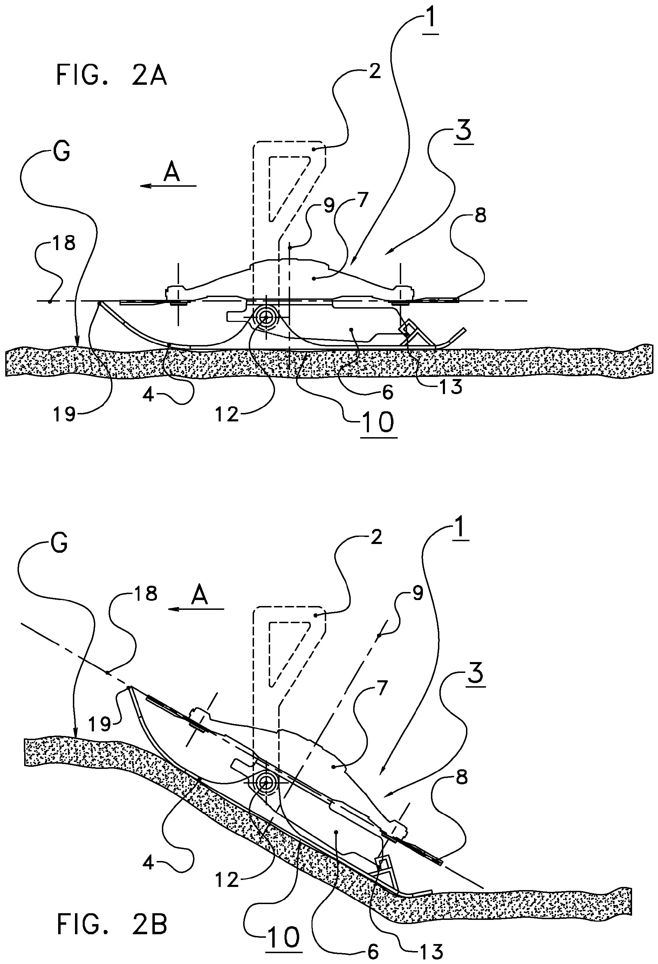

Figures 2A and 2B show another embodiment of a mowing machine 1. The same parts or parts having substantially the same function are denoted by the same reference numerals as used with respect to the embodiment of Figures 1A and 1B.

The main difference between the embodiment of Figures 1A and 1B and the embodiment of Figure 2A and 2B is that the frame 2 is shaped differently. However, the mowing section 2 and the first and second skid plates 4 (only one shown) are pivotably mounted on a common axis of rotation 12. As a result, the assembly consisting of the mowing section 2 and the first and second skid plates 4, 5 may follow irregularities in the ground surface G.

In Figure 2A, the mowing machine 1 is shown on a relatively flat ground surface G. When the mowing members 7 are rotated and the mowing machine is moved in the direction A, the cutting blades 8 will cut crop material of the ground over which the mowing machine is moved.

Figure 2B shows how the orientation of the first and second skid plates 4, 5 and therewith the orientation of the mowing section 3 adapts itself to a steep height increase of a ground surface G as a result of rotation of the combination of skid plates 4, 5 and mowing section 3 about the common axis of rotation 12.

It is remarked that since the front end 19 of the skid plates 4, 5 extends in front of the circular path of movement of the cutting blades 8, the risk that the cutting blades 8 hit the ground surface G is substantially reduced even when the mowing machine 1 is driven over a relatively steep height increase in the ground surface.

Further, since the first and second skid plates 4, 5 remain supported on the ground surface G, the cutting blades 8 are at a position to cut the grass. As a result, the mowing machine 1 can relatively easily and substantially without risk of damage of the mowing machine be moved over a steep height increase to cut the crop on such steep increase.

In case there are irregularities that are smaller than a distance between the first support device 4 and the second support device 5, for example a heap of sand smaller than this distance, such heap of sand may still cause damage to the mowing section 3. To avoid such risk it may be advantageous to arrange further support devices, such as intermediate skid elements between the first skid plate 4 and the second skid plate 5.

The mowing machine 1 comprises at each end of the mowing section an angle adjustment device 13 to adjust an angular position between the mowing section 3 and the first skid plate 4 and the second skid plate 5, respectively. Figures 3A and 3B show the angle adjustment device 13 at the side of the first skid plate 4. A similar angle adjustment device 13 is provided at the opposed end of the mowing section 3 between the mowing section 3 and the second skid plate 5.

The angle adjustment device 13 comprises an adjustment screw 14 configured to adapt a distance between the first skid plate 4 and the mowing section 3. The adjustment screw 14 may for example freely rotate at the end where it is fixed to the skid plate 4, while the mowing section 3 is provided with an opening provided with screw thread through which the adjustment screw 14 extends. By rotation of the adjustment screw 14, the opening can be moved along the length of the adjustment screw, and therewith the distance between the mowing section 3 and the first skid plate 4 can be adjusted.

A screw nut 15 may be provided as a locking device to lock the adjustment screw 14 in a desired position, such that the adjustment screw 14 can no longer be rotated as long as the screw nut 15 is not released.

Figure 3A shows a first position of the angle adjustment device 13 in which a distance 17 between the first skid plate 4 and the mowing section 3 at the location of the angle adjustment device 13 is relatively large. As a result of this angular position, the cutting blades 8 at the front end of the mowing machine 1 are arranged relatively close to the ground surface and the cutting height 16 of grass that is cut by the cutting blades 8 will be relatively short.

Figure 3B shows a second position of the angle adjustment device 13. In this second position, the distance 17 between the first skid plate 4 and the mowing section 3 at the location of the angle adjustment device 13 is relatively small. As a result of this angular position, the cutting blades 8 at the front end of the mowing machine 1 are arranged relatively far from the ground surface and the cutting height 16 of grass that is cut by the cutting blades 8 will be relatively long.

Correspondingly, at the other end of the mowing section 3, the cutting height 16 of the mowing section 3 may be adjusted by the angle adjustment device 13 arranged between the second skid plate 5 and the mowing section 3. It is remarked that it is generally desirable to adjust the angle adjustment devices 13 associated with the first skid plate 4 and the second skid plate 5 such that the cutting height 16 over the whole width of the mowing machine 1 is substantially the same.

It is remarked that any other device to adjust the distance between the first skid plate 4 and the mowing section 3 at a location spaced from the common axis of rotation 12 to adjust the cutting height of the mowing section 3 may also be applied. Such alternative embodiment may comprise an adjustment screw, but may also comprise other means to adapt such distance.

Further, it is remarked that the first skid plate 4 and the second skid plate 5 are formed with a slide surface to slide over the ground surface G. In other embodiments, the skid plates may be formed by wheels or other contact elements configured to contact the ground surface G in order to at least partially support the mowing machine 1 and to guide the mowing section 3 over the ground surface.

The invention can also be described by the following clauses:
1. A mowing machine (1) comprising: - a frame (2), - a mowing section (3) comprising a plurality of mower members (7) each rotatable about an upwardly directed axis of rotation (9) and provided with at least one mowing blade (8), the mowing blades (8) of the mower members (7) defining a mowing plane (18) which extends substantially perpendicular to the axes of rotation (9), and - a support device (4, 5) by means of which the mowing machine (1), during operation, rests on a ground surface with at least part of its weight, wherein the mowing section (3) and the support device (4, 5), in a predetermined angular position with respect to each other, together are pivotally connected to the frame (2) about a common axis of rotation (12) which is substantially perpendicular to an intended forward direction of movement (A) of the mowing machine (1), characterised in that the common axis of rotation (12) is arranged below the mowing plane (18) and, as seen in the intended forward direction of movement (A) of the mowing machine (1), in front of a mass center (M) of the mowing section (3).
2. The mowing machine (1) as claimed in claim 1, wherein the common axis of rotation (12), as seen in the intended forward direction of movement (A) of the mowing machine (1), is arranged in front of the axes of rotation (9) of the plurality of mower members (7).
3. The mowing machine (1) as claimed in claim 1 or 2, wherein the support device (4, 5), as seen in the intended forward direction of movement (A) of the mowing machine (1), is delimited by a front edge (19), and wherein the common axis of rotation (12), as seen in the intended forward direction of movement (A) of the mowing machine (1), is arranged between the front edge (19) and the axes of rotation (9).
4. The mowing machine (1) as claimed in any of the claims 1-3, wherein the support device (4, 5) extends, as seen in the intended forward direction of movement (A) of the mowing machine (1), up to or beyond the circular path of the mowing blades (8).
5. The mowing machine (1) as claimed in any of the claims 1-4, wherein the support device (4, 5) comprises a skid plate having slide surface (10, 11) configured to slide over the ground surface (G).
6. The mowing machine (1) as claimed in any of the claims 1-5, wherein the support device (4, 5) comprises a first skid plate (4) extending at a first lateral end of the frame (2) and a second skid plate (5) extending at a second lateral end of the frame (2) opposite to the first lateral end.
7. The mowing machine (1) as claimed in any of the claims 1-6, wherein the mowing section (3) and the support device (4, 5) are pivotable about the common axis of rotation (12) with respect to each other for adjusting the predetermined angular position of the mowing section (3) and the support device (4, 5) with respect to each other.
8. The mowing machine (1) as claimed in claim 7, wherein the mowing machine comprises an angle adjustment device (13) to adjust the angular position of the mowing section (3) and the support device (4, 5) with respect to each other in order to adjust a cutting height of the mowing section.
9. The mowing machine (1) as claimed in claim 8, wherein the angle adjustment device (13) comprises an adjustment screw (14) arranged between the mowing section (3) and the support device (4, 5) at a distance from the common axis of rotation (12).
10. The mowing machine (1) as claimed in any of the claims 1-5, wherein the mowing section (3) and the support device (4, 5) can be fixed with respect to each other in the predetermined angular position with respect to each other.
11. The mowing machine (1) as claimed in any of the claims 1-10, wherein the support device comprises one or more wheels.
12. The mowing machine (1) as claimed in any of the claims 1-11, wherein the mowing section (3) and the support device (4, 5) are configured to follow irregularities in the ground surface by rotation about the common axis of rotation (12) without a change in the angular position of the mowing section (3) and the support device (4, 5) with respect to each other.
13. The mowing machine (1) as claimed in any of the claims 1-12, wherein the mowing members (7) are arranged in a row extending transversely to the intended forward direction of movement (A).
14. The mowing machine (1) as claimed in any of the claims 1-13, wherein, during operation, the axes of rotation (9) of the mower members (7) each extend in a substantially vertical direction.
15. The mowing machine (1) as claimed in any of the claims 1-14, wherein the frame (2) is configured to be mounted on a three-point lifting hitch of a tractor or such.

## Claims

1. A mowing machine (1) comprising:
- a frame (2),
- a mowing section (3) comprising a plurality of mower members (7) each rotatable about an upwardly directed axis of rotation (9) and provided with at least one mowing blade (8), the mowing blades (8) of the mower members (7) defining a mowing plane (18) which extends substantially perpendicular to the axes of rotation (9), and
- a support device (4, 5) by means of which the mowing machine (1), during operation, rests on a ground surface with at least part of its weight,
wherein the mowing section (3) and the support device (4, 5), in a predetermined angular position with respect to each other, together are pivotally connected to the frame (2) about a common axis of rotation (12) which is substantially perpendicular to an intended forward direction of movement (A) of the mowing machine (1),
**characterised in that** the common axis of rotation (12) is arranged below the mowing plane (18) and, as seen in the intended forward direction of movement (A) of the mowing machine (1), in front of a mass center (M) of the mowing section (3).

2. The mowing machine (1) as claimed in claim 1, wherein the common axis of rotation (12), as seen in the intended forward direction of movement (A) of the mowing machine (1), is arranged in front of the axes of rotation (9) of the plurality of mower members (7).

3. The mowing machine (1) as claimed in claim 1 or 2, wherein the support device (4, 5), as seen in the intended forward direction of movement (A) of the mowing machine (1), is delimited by a front edge (19), and wherein the common axis of rotation (12), as seen in the intended forward direction of movement (A) of the mowing machine (1), is arranged between the front edge (19) and the axes of rotation (9).

4. The mowing machine (1) as claimed in any of the claims 1-3, wherein the support device (4, 5) extends, as seen in the intended forward direction of movement (A) of the mowing machine (1), up to or beyond the circular path of the mowing blades (8).

5. The mowing machine (1) as claimed in any of the claims 1-4, wherein the support device (4, 5) comprises a skid plate having slide surface (10, 11) configured to slide over the ground surface (G).

6. The mowing machine (1) as claimed in any of the claims 1-5, wherein the support device (4, 5) comprises a first skid plate (4) extending at a first lateral end of the frame (2) and a second skid plate (5) extending at a second lateral end of the frame (2) opposite to the first lateral end.

7. The mowing machine (1) as claimed in any of the claims 1-6, wherein the mowing section (3) and the support device (4, 5) are pivotable about the common axis of rotation (12) with respect to each other for adjusting the predetermined angular position of the mowing section (3) and the support device (4, 5) with respect to each other.

8. The mowing machine (1) as claimed in claim 7, wherein the mowing machine comprises an angle adjustment device (13) to adjust the angular position of the mowing section (3) and the support device (4, 5) with respect to each other in order to adjust a cutting height of the mowing section.

9. The mowing machine (1) as claimed in claim 8, wherein the angle adjustment device (13) comprises an adjustment screw (14) arranged between the mowing section (3) and the support device (4, 5) at a distance from the common axis of rotation (12).

10. The mowing machine (1) as claimed in any of the claims 1-5, wherein the mowing section (3) and the support device (4, 5) can be fixed with respect to each other in the predetermined angular position with respect to each other.

11. The mowing machine (1) as claimed in any of the claims 1-10, wherein the support device comprises one or more wheels.

12. The mowing machine (1) as claimed in any of the claims 1-11, wherein the mowing section (3) and the support device (4, 5) are configured to follow irregularities in the ground surface by rotation about the common axis of rotation (12) without a change in the angular position of the mowing section (3) and the support device (4, 5) with respect to each other.

13. The mowing machine (1) as claimed in any of the claims 1-12, wherein the mowing members (7) are arranged in a row extending transversely to the intended forward direction of movement (A).

14. The mowing machine (1) as claimed in any of the claims 1-13, wherein, during operation, the axes of rotation (9) of the mower members (7) each extend in a substantially vertical direction.

15. The mowing machine (1) as claimed in any of the claims 1-14, wherein the frame (2) is configured to be mounted on a three-point lifting hitch of a tractor or such.

## Patentansprüche

1. Mähmaschine (1), mit:
- einem Rahmen (2),
- einer Mähgruppe (3) mit einer Mehrzahl von Mähbauteilen (7), die jeweils um eine nach oben gerichtete Rotationsachse (9) rotierbar und mit mindestens einer Mähklinge (8) versehen sind, wobei die Mähklingen (8) der Mähbauteile (7) eine Mähebene (18) definieren, die sich im Wesentlichen senkrecht zu den Rotationsachsen (9) erstreckt, und
- einer Stützvorrichtung (4, 5), mittels derer die Mähmaschine (1) während ihres Betriebs mit mindestens einem Teil ihres Gewichts auf einer Bodenfläche ruht,
wobei die Mähgruppe (3) und die Stützvorrichtung (4, 5), in einer vorbestimmten Winkelposition relativ zueinander, zusammen um eine gemeinsame Rotationsachse (12) schwenkbar mit dem Rahmen (2) verbunden sind, die im Wesentlichen senkrecht zu einer vorgesehenen Vorwärts-Bewegungsrichtung (A) der Mähmaschine (1) verläuft,
**dadurch gekennzeichnet, dass** die gemeinsame Rotationsachse (12) unterhalb der Mähebene (18) und in der vorgesehenen Vorwärts-Bewegungsrichtung (A) der Mähmaschine (1) gesehen vor einem Schwerpunkt (M) der Mähgruppe (3) angeordnet ist.

2. Mähmaschine (1) nach Anspruch 1, wobei die gemeinsame Rotationsachse (12) in der vorgesehenen Vorwärts-Bewegungsrichtung (A) der Mähmaschine (1) gesehen vor den Rotationsachsen (9) der Mehrzahl der Mähbauteile (7) angeordnet ist.

3. Mähmaschine (1) nach Anspruch 1 oder 2, wobei die Stützvorrichtung (4, 5) in der vorgesehenen Vorwärts-Bewegungsrichtung (A) der Mähmaschine (1) gesehen durch eine Vorderkante (19) begrenzt ist und wobei die gemeinsame Rotationsachse (12) in der vorgesehenen Vorwärts-Bewegungsrichtung (A) der Mähmaschine (1) gesehen zwischen der Vorderkante (19) und den Rotationsachsen (9) angeordnet ist.

4. Mähmaschine (1) nach einem der Ansprüche 1-3, wobei sich die Sperrvorrichtung (4, 5) in der vorgesehenen Vorwärts-Bewegungsrichtung (A) der Mähmaschine (1) gesehen bis zu dem kreisförmigen Pfad der Mähklingen (8) oder darüber hinaus erstreckt.

5. Mähmaschine (1) nach einem der Ansprüche 1-4, wobei die Stützvorrichtung (4, 5) eine Kufenplatte mit einer Gleitoberfläche (10, 11) aufweist, die dazu eingerichtet ist, über die Bodenfläche (G) zu gleiten.

6. Mähmaschine (1) nach einem der Ansprüche 1-5, wobei die Stützvorrichtung (4, 5) eine erste Kufenplatte (4), die sich an einem ersten lateralen Ende des Rahmens (2) erstreckt, und eine zweite Kufenplatte (5) aufweist, die sich an einem zweiten lateralen Ende des Rahmens (2) gegenüber dem ersten lateralen Ende erstreckt.

7. Mähmaschine (1) nach einem der Ansprüche 1-6, wobei die Mähgruppe (3) und die Stützvorrichtung (4, 5) relativ zueinander um die gemeinsame Rotationsachse (12) schwenkbar sind, um die vorbestimmte Winkelposition der Mähgruppe (3) und der Stützvorrichtung (4, 5) relativ zueinander nachzustellen.

8. Mähmaschine (1) nach Anspruch 7, wobei die Mähmaschine eine Winkel-Nachstellvorrichtung (13) zum Nachstellen der Winkelposition der Mähgruppe (3) und der Stützvorrichtung (4, 5) relativ zueinander zum Nachstellen einer Schneidhöhe der Mähgruppe aufweist.

9. Mähmaschine (1) nach Anspruch 8, wobei die Winkel-Nachstellvorrichtung (13) eine zwischen der Mähgruppe (3) und der Stützvorrichtung (4, 5) mit einem Abstand von der gemeinsamen Rotationsachse (12) angeordnete Nachstellschraube (14) aufweist.

10. Mähmaschine (1) nach einem der Ansprüche 1-5, wobei die Mähgruppe (3) und die Stützvorrichtung (4, 5) relativ zueinander in der vorbestimmten Winkelposition relativ zueinander fixiert werden können.

11. Mähmaschine (1) nach einem der Ansprüche 1-10, wobei die Stützvorrichtung ein Rad oder mehrere Räder aufweist.

12. Mähmaschine (1) nach einem der Ansprüche 1-11, wobei die Mähgruppe (3) und die Stützvorrichtung (4, 5) dazu eingerichtet sind, Unregelmäßigkeiten in der Bodenfläche durch Rotation um die gemeinsame Rotationsachse (12) ohne eine Änderung in der Winkelposition der Mähgruppe (3) und der Stützvorrichtung (4, 5) relativ zueinander zu folgen.

13. Mähmaschine (1) nach einem der Ansprüche 1-12, wobei die Mähbauteile (7) in einer Reihe angeordnet sind, die sich quer zu der vorgesehenen Vorwärts-Bewegungsrichtung (A) erstreckt.

14. Mähmaschine (1) nach einem der Ansprüche 1-13, wobei sich die Rotationsachsen (9) der Mähbauteile (7) während des Betriebs jeweils in einer im Wesentlichen vertikalen Richtung erstrecken.

15. Mähmaschine (1) nach einem der Ansprüche 1-14, wobei der Rahmen (2) dazu eingerichtet ist, an einer Drei-Punkt-Hebekupplung eines Traktors oder ähnlichem befestigt zu werden.

## Revendications

1. Faucheuse (1) comprenant :
- un châssis (2),
- une section de fauchage (3) comprenant une pluralité d'organes faucheurs (7) chacun tournant autour d'un axe de direction (9) dirigé vers le haut et pourvu d'au moins une lame de fauchage (8), les lames de fauchage (8) des organes faucheurs (7) définissant un plan de fauchage (18) qui s'étend sensiblement perpendiculaire aux axes de rotation (9), et
- un dispositif de support (4, 5) au moyen duquel la faucheuse (1), pendant un fonctionnement, repose sur une surface de sol avec au moins une partie de son poids,
dans laquelle la section de fauchage (3) et le dispositif de support (4, 5), dans une position angulaire prédéterminée l'un par rapport à l'autre, sont raccordés ensemble en pivotement sur le châssis (2) autour d'un axe de rotation commun (12) qui est sensiblement perpendiculaire à une direction de déplacement vers l'avant prévue (A) de la faucheuse (1),
**caractérisée en ce que** l'axe de rotation commun (12) est agencé en dessous du plan de fauchage (18) et, dans une vue dans la direction de déplacement vers l'avant prévu (A) de la faucheuse (1), devant un centre de masse (M) de la section de fauchage (3).

2. Faucheuse (1) selon la revendication 1, dans laquelle l'axe de rotation commun (12), dans une vue dans la direction de déplacement vers l'avant prévue (A) de la faucheuse (1), est agencé devant les axes de rotation (9) de la pluralité d'organes faucheurs (7).

3. Faucheuse (1) selon la revendication 1 ou 2, dans laquelle le dispositif de support (4, 5), dans une vue dans la direction de déplacement vers l'avant prévue (A) de la faucheuse (1), est délimité par un bord avant (19), et dans laquelle l'axe de rotation commun (12), dans une vue dans la direction de déplacement vers l'avant prévue (A) de la faucheuse (1), est agencé entre le bord avant (19) et les axes de rotation (9).

4. Faucheuse (1) selon l'une quelconque des revendications 1 à 3, dans laquelle le dispositif de support (4, 5) s'étend, dans une vue dans la direction de déplacement vers l'avant prévue (A) de la faucheuse (1), jusqu'au ou au-delà du chemin circulaire des lames de fauchage (8).

5. Faucheuse (1) selon l'une quelconque des revendications 1 à 4, dans laquelle le dispositif de support (4, 5) comprend une plaque de protection ayant une surface de glissement (10, 11) configurée pour glisser sur la surface de sol (G).

6. Faucheuse (1) selon l'une quelconque des revendications 1 à 5, dans laquelle le dispositif de support (4, 5) comprend une première plaque de protection (4) s'étendant au niveau d'une première extrémité latérale du châssis (2) et une seconde plaque de protection (5) s'étendant au niveau d'une seconde extrémité latérale du châssis (2) opposée à la première extrémité latérale.

7. Faucheuse (1) selon l'une quelconque des revendications 1 à 6, dans laquelle la section de fauchage (3) et le dispositif de support (4, 5) sont pivotants autour de l'axe de rotation commun (12) l'un par rapport à l'autre pour régler la position angulaire prédéterminée de la section de fauchage (3) et du dispositif de support (4, 5) l'un par rapport à l'autre.

8. Faucheuse (1) selon la revendication 7, dans laquelle la faucheuse comprend un dispositif de réglage d'angle (13) pour régler la position angulaire de la section de fauchage (3) et du dispositif de support (4, 5) l'un par rapport à l'autre afin de régler une hauteur de coupe de la section de fauchage.

9. Faucheuse (1) selon la revendication 8, dans laquelle le dispositif de réglage d'angle (13) comprend une vis de réglage (14) agencée entre la section de fauchage (3) et le dispositif de support (4, 5) à une distance de l'axe de rotation commun (12).

10. Faucheuse (1) selon l'une quelconque des revendications 1 à 5, dans laquelle la section de fauchage (3) et le dispositif de fauchage (4, 5) peuvent être fixes l'un par rapport à l'autre dans la position angulaire prédéterminée l'un par rapport à l'autre.

11. Faucheuse (1) selon l'une quelconque des revendications 1 à 10, dans laquelle le dispositif de support comprend une ou plusieurs roues.

12. Faucheuse (1) selon l'une quelconque des revendications 1 à 11, dans laquelle la section de fauchage (3) et le dispositif de support (4, 5) sont configurés pour suivre des irrégularités de la surface de sol par rotation autour de l'axe de rotation commun (12) sans changement de la position angulaire de la section de fauchage (3) et du dispositif de support (4, 5) l'un par rapport à l'autre.

13. Faucheuse (1) selon l'une quelconque des revendications 1 à 12, dans laquelle les organes faucheurs (7) sont agencés en une rangée s'étendant transversalement à la direction de déplacement vers l'avant prévu (A).

14. Faucheuse (1) selon l'une quelconque des revendications 1 à 13, dans laquelle, pendant un fonctionnement, les axes de rotation (9) des organes faucheurs (7) s'étendent chacun dans une direction sensiblement verticale.

15. Faucheuse (1) selon l'une quelconque des revendications 1 à 14, dans laquelle le châssis (2) est configuré pour être monté sur un attelage de relevage à trois points d'un tracteur ou similaire.
